# FASCICULE DE BREVET EUROPEEN

(11) **EP 2 288 910 B1**
(45) Date de publication et mention de la délivrance du brevet: **10.01.2018**
(21) Numéro de dépôt: 09757727.4
(22) Date de dépôt: 13.05.2009
(51) Int. Cl.: G01N 27/90

(54) **SONDE DESTINEE AU CONTROLE PAR COURANTS DE FOUCAULT DE LA SURFACE D'UNE ALVEOLE CIRCONFERENTIELLE D'UN DISQUE DE TURBOREACTEUR**
SONDE ZUR ÜBERPRÜFUNG DER OBERFLÄCHE EINER IN EINER SCHEIBE EINES STRAHLTRIEBWERKS UMLAUFENDEN NUT MITTELS WIRBELSTRÖMEN
PROBE FOR CONTROLLING THE SURFACE OF A CIRCUMFERENTIAL RECESS OF A TURBOJET ENGINE DISC USING EDDY CURRENTS

(30) Priorité: 14.05.2008 FR 0853109
(43) Date de publication de la demande: 02.03.2011
(73) Titulaire: Snecma, 75015 Paris (FR)
(72) Inventeur: CABANIS, Patrick, F-77390 Ozouer Le Voulgis (FR); CHEYNET, Sandra, F-91220 Le Plessis Pate (FR); GAISNON, Patrick, F-77130 Cannes Ecluse (FR); RAVIZE, Luc, F-64510 Bordes (FR)
(74) Mandataire: Intès, Didier Gérard André
(86) Numéro de dépôt international: PCT/FR2009/050877
(87) Numéro de publication internationale: WO 2009/147351

(56) Documents cités:
- EP-A- 0 577 244
- EP-A- 1 245 953
- DE-A1- 2 530 816
- US-A- 5 781 007
- US-A1- 2007 120 559

## Description

La présente invention concerne une sonde destinée au contrôle par courants de Foucault des anomalies et irrégularités de surface d'une alvéole circonférentielle d'un disque de turboréacteur.

Les alvéoles circonférentielles de disques de turboréacteur, destinées à accueillir des séries d'aubes, sont soumises à de fortes contraintes lors du fonctionnement du turboréacteur, en particulier sur leurs faces de forme annulaire concave (ci-après « faces latérales » de l'alvéole). Ce type d'alvéoles nécessite, de ce fait, un contrôle très régulier. Compte tenu de l'accessibilité réduite des faces latérales, on utilise couramment, pour la vérification de leur état de surface, le contrôle par courants de Foucault. Ce type de contrôle consiste à balayer la surface à examiner à l'aide d'une sonde munie d'un capteur, qui, en créant un champ électro magnétique, produit des courants de Foucault dans la pièce à contrôler. En pratique, la pièce est le plus souvent pivotée tandis que la sonde reste en place sur son support. Dans le cas où la surface de l'alvéole présente des anomalies, le flux de courants de Foucault est altéré, et le capteur génère un signal électrique correspondant à cette altération. L'amplitude de ce signal est proportionnelle à l'importance de l'anomalie de surface détectée. Pour que cette proportionnalité puisse être respectée, il faut toutefois que le contact entre la surface à contrôler et la sonde à courants de Foucault soit maintenu en permanence.

On connaît déjà des sondes sabot composées d'un capteur mono-élément fixé à l'extrémité d'une tige pouvant être déplacée par l'intermédiaire de son support dans les directions axiale et radiale du disque de turboréacteur. Ce type de sonde nécessite un déplacement pas à pas de la sonde le long du profil à examiner, chaque déplacement de la sonde dans la direction axiale étant suivi d'une rotation du disque ou de la sonde, afin de balayer l'ensemble de la surface de l'alvéole. Le capteur mono-élément est introduit dans l'alvéole, mis au contact de la surface à contrôler, puis la pièce subit une révolution complète de sorte qu'une bande circonférentielle complète de l'alvéole est examinée. Cette opération est réitérée plusieurs fois en changeant chaque fois la position du capteur mono-élément sur la surface à contrôler, jusqu'à scruter la totalité de la surface de l'alvéole. Le capteur mono-élément étant dissymétrique, après avoir contrôlé une face latérale de l'alvéole, il est nécessaire de le retourner afin d'examiner le côté opposé. Le résultat permettant d'évaluer l'état de surface de l'alvéole est obtenu en incrémentant les résultats des différentes mesures effectuées à l'aide du capteur mono-élément.

Afin de réduire le nombre de mesures nécessaires à l'inspection complète de la surface d'une alvéole, il a été imaginé de remplacer le capteur mono-élément de la sonde par un capteur multiélément, dont la forme s'adapte avantageusement au profil d'une des faces latérales de l'alvéole. Il ne suffit plus alors que de deux opérations (une révolution pour chaque face latérale de l'alvéole, en retournant le capteur entre les deux opérations) pour contrôler la totalité de l'alvéole. Une sonde à courants de Foucault est également connus des documents EP0577244 et EP1245953. Ces deux systèmes présentent plusieurs inconvénients. multiplication des mesures et des calculs, de même que les difficultés de positionnement du capteur contre la surface à examiner, diminuent la précision des résultats. Par ailleurs, dans la mesure où ces systèmes connus ne permettent qu'une inspection unilatérale de l'alvéole, des problèmes de fléchissement de la tige apparaissent au cours du temps, faussant les résultats de mesures en raison d'une mauvaise orientation du capteur multiélément par rapport à la surface à contrôler.

La présente invention concerne en particulier un perfectionnement d'une sonde à capteur multiélément.

L'invention se propose de limiter le nombre d'opérations nécessaires au contrôle par courants de Foucault de la surface des alvéoles circonférentielles de disque de turboréacteur. Elle a également pour but de permettre un positionnement optimum de la sonde dans l'alvéole. Elle permet ainsi de réduire considérablement la durée du contrôle et d'augmenter la précision des résultats.

En premier lieu, l'invention concerne une sonde destinée au contrôle par courants de Foucault de la surface d'une alvéole circonférentielle formée dans un disque de turboréacteur, telle que définie dans la revendication 3. Chaque capteur multiélément est respectivement destiné à venir au contact d'une face latérale de l'alvéole. Ces capteurs multiéléments comportent une pluralité d'éléments délivrant des signaux haute fréquence correspondant au niveau d'altération de la surface contrôlée. L'acquisition de ces signaux est réalisée en temps réel, un générateur numérique de courants de Foucault assurant leur émission, leur réception et leur démodulation. Ces signaux sont ensuite transformés en images par un logiciel de traitement, de manière à pouvoir être interprétés par l'opérateur.

L'ensemble des deux capteurs multiéléments positionnés dos-à-dos a une largeur nécessairement supérieure à la largeur d'entrée de l'alvéole. Pour permettre l'introduction de la sonde dans l'alvéole, la tige est montée pivotante sur son support, par exemple par un système de glissière à billes et de ressorts.

De préférence, au moins un ressort est intercalé entre les deux capteurs multiéléments.

Selon une disposition préférentielle de l'invention, chaque capteur multiélément a une forme correspondant au profil d'une face de l'alvéole à contrôler.

Selon une autre disposition préférentielle de l'invention, les deux capteurs multiéléments sont maintenus dos-à-dos et sont reliés à la tige par un agencement de coulissement.

En second lieu, l'invention concerne un procédé selon la revendication 1 de contrôle par courants de Foucault de la surface d'une alvéole circonférentielle formée dans un disque de turboréacteur, au moyen d'une sonde telle que décrite ci-dessus et caractérisé en ce qu'il comprend les étapes consistant à
a) Positionner les deux capteurs en regard de l'ouverture de l'alvéole, de sorte qu'un axe commun de ceux-ci est perpendiculaire à l'axe du disque,
b) déplacer la sonde dans une direction radiale du disque, vers l'intérieur de l'alvéole, de manière à introduire les deux capteurs multiéléments dans ladite alvéole, puis
c) faire pivoter la tige d'un angle de 90°, de sorte que les capteurs multiéléments sont en contact avec les faces latérales de l'alvéole à contrôler, et enfin
d) balayer toute la surface de l'alvéole circonférentielle.

Avantageusement, lors de l'étape d) du procédé décrit ci-dessus, la sonde reste fixe et le disque tourne d'un angle de 360°

Grâce aux dispositions de la présente invention, il est possible d'acquérir toutes les données en un seul tour de balayage de la sonde. Les deux faces latérales de l'alvéole sont contrôlées simultanément par deux capteurs multiéléments. Par ailleurs, un contact optimal peut être maintenu entre les capteurs multiéléments et le disque, grâce à un ou plusieurs ressorts de rappel disposés entre les deux capteurs disposés dos-à-dos. En réduisant le nombre d'opérations du contrôle, la sonde selon l'invention diminue l'influence du facteur humain sur les résultats de mesure et limite ainsi les risques d'erreur. En assurant un bon contact de la sonde contre les faces latérales de l'alvéole, elle permet également d'affiner les résultats de mesure. Enfin, malgré l'accès réduit à la géométrie à contrôler, et grâce à l'auto-équilibrage des capteurs disposés dos-à-dos, il est possible d'éviter les phénomènes de fléchissement de la tige qui peuvent conduire à une rupture du contact entre les capteurs et les surfaces à contrôler.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en coupe partielle d'une alvéole circonférentielle de disque de turboréacteur, dans laquelle est insérée une sonde selon l'invention ;
- les figures 2a à 2c représentent les étapes successives du procédé de contrôle de la surface d'une alvéole circonférentielle, selon l'invention.

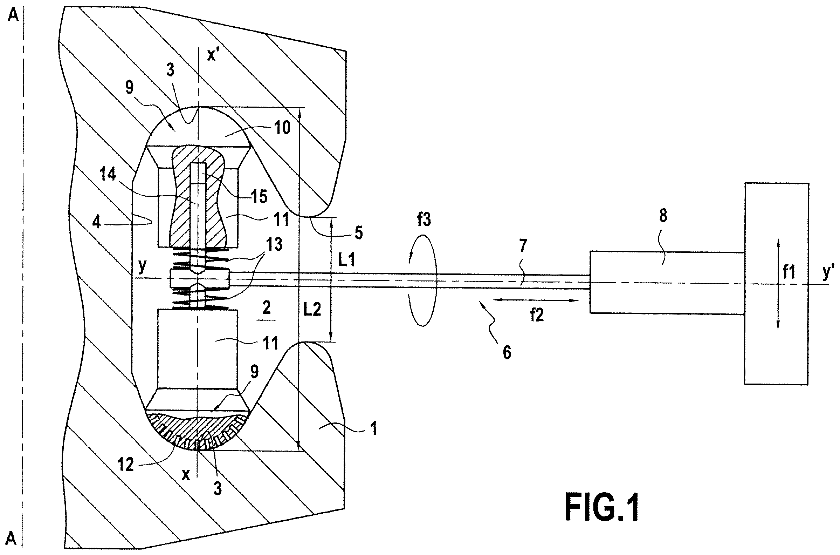

La figure 1 représente une portion de disque 1 d'un turboréacteur, dans lequel a été usinée une alvéole circonférentielle 2 destinée à accueillir une série d'aubes. L'alvéole se compose d'une face centrale 4 sensiblement cylindrique d'axe A-A, et de deux faces latérales 3 de forme annulaire concave. L'alvéole 2 débouche par une ouverture annulaire 5 de largeur L₁ prise dans la direction axiale. La largeur L₁ de l'ouverture 5 est inférieure à la plus grande largeur L₂ de l'alvéole 2 prise dans la direction axiale, c'est-à-dire entre les faces latérales 3.

Une sonde selon la présente invention est décrite à présent en référence à la figure 1. La sonde 6 est constituée d'une tige 7, d'un support 8 et de deux capteurs multiéléments 9. Les flèches f₁, f₂, f₃ représentent les degrés de liberté de la tige 7, assurés par des glissières à billes et ressorts non-représentés. Ces degrés de liberté sont définis dans la suite en référence au repère du disque de turboréacteur. En particulier, la flèche f₁ correspond à un déplacement axial de la tige, la flèche f₂ correspond à un déplacement radial, tandis que f₃ désigne un pivotement de la tige autour de son axe y-y' s'étendant dans la direction radiale du disque 1. A l'extrémité opposée de la tige 7 sont fixés deux capteurs multiéléments 9 disposés dos-à-dos, symétriques par rapport à l'axe y-y' de la tige. La symétrie des deux capteurs contribue à l'auto-équilibrage de la sonde 6, permettant d'éviter les phénomènes de fléchissement de la tige et ainsi, de maintenir un contact optimal entre les capteurs 9 et les faces 3 de l'alvéole à contrôler. Chaque capteur 9 est constitué d'une partie de contact 10 et d'une partie d'attache 11. La partie de contact 10 présente un profil correspondant sensiblement au profil de la face latérale 3 destinée à être balayée. Comme illustré sur la figure 1, la partie de contact 10 présente une pluralité d'éléments 12 délivrant des signaux haute fréquence correspondant au niveau d'altération de la surface avec laquelle ils entrent en contact. La partie d'attache 11 est destinée à accueillir le ou les moyens de montage du capteur 9 par rapport à la tige 7. Sur la figure 1, les capteurs 9 sont liés à la tige 7 par l'intermédiaire de deux ressorts de rappel 13. Un guide de coulissement 14 est prévu, en outre, pour maintenir les deux capteurs 9 dos-à-dos et dans un plan perpendiculaire à l'axe y-y' de la tige 7. Ce guide 14 est constitué de deux tiges coulissant dans un alésage 15 formé dans la partie d'attache 11 d'un capteur 9 correspondant, les alésages 15 des deux capteurs 9 étant disposés en regard l'un de l'autre.

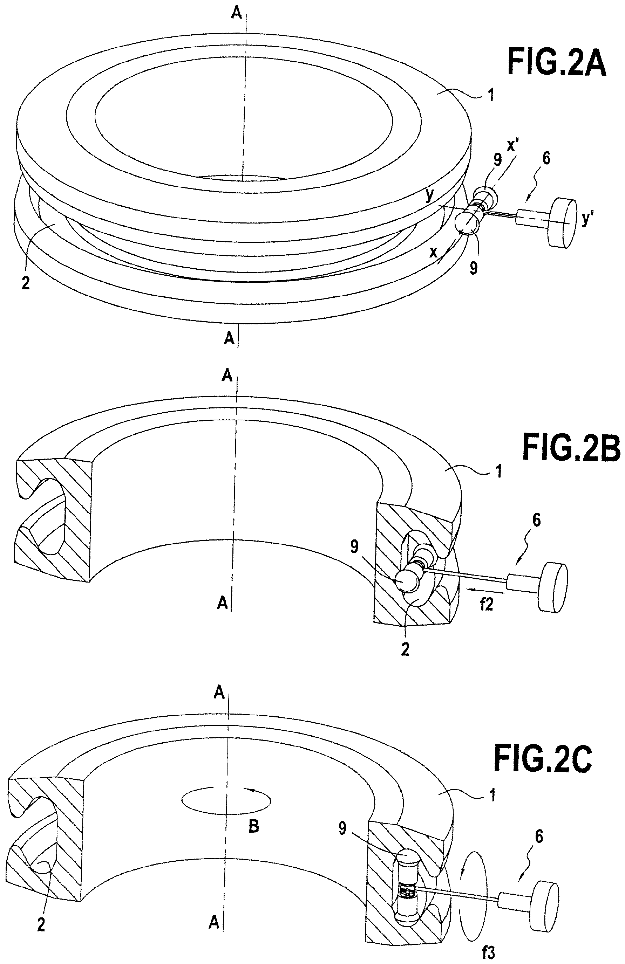

Le procédé de contrôle par courants de Foucault réalisé au moyen de la sonde présentée ci-dessus va être décrit à présent en référence aux figures 2a à 2c.

La figure 2a représente le disque de turboréacteur 1, dans lequel est formée l'alvéole 2 dont on souhaite contrôler l'état de surface. La sonde 6 est déplacée dans la direction f₁ jusqu'à ce que son axe soit situé dans le plan médian de l'alvéole circonférentielle 2. La sonde est ensuite pivotée selon f₃ de sorte que les deux capteurs 9 disposés dos-à-dos sont tous deux placés en regard de l'ouverture de l'alvéole 2, leur axe commun x-x' étant perpendiculaire à l'axe A-A du disque.

Comme représenté sur la figure 2b, les deux capteurs 9 de la sonde 6 sont alors insérés dans l'alvéole 2 par un déplacement de la tige 7 dans la direction radiale f₂.

La figure 2c représente le positionnement des capteurs 9 contre les faces latérales 3 de l'alvéole 2. Pour cela, on fait pivoter la tige 7 d'un angle de 90° autour de son axe y-y', de sorte que l'axe commun des deux capteurs x-x' soit parallèle à l'axe A-A du disque de turboréacteur 1. Lors du pivotement de la tige 7, les capteurs 9 arrivent en butée contre les faces latérales 3 de l'alvéole 2 avant d'être positionnés correctement dans l'axe A-A du disque 1. A partir de cet instant, et jusqu'au positionnement final des capteurs 9, les ressorts de rappel 13 sont comprimés, forçant le contact des capteurs 9 contre les faces latérales 3 de l'alvéole 2. Le ressort de rappel contribue au maintien d'un contact optimal entre les capteurs 9 et la surface 3 de l'alvéole 2, et, par conséquent, à l'obtention d'un signal électrique précisément proportionnel au niveau d'altération de la surface.

La flèche B représentée sur la figure 2c illustre l'opération de balayage de l'alvéole 2. De préférence, la sonde 6 reste en place, tandis que le disque 1 de turboréacteur tourne autour de son axe A-A.

Lors du balayage circonférentiel de l'alvéole 2, les deux capteurs 9 délivrent des signaux haute fréquence proportionnels au niveau d'altération des faces latérales 3 de l'alvéole 2. Ces signaux sont ensuite filtrés et affichés sur écran sous forme d'images représentatives des résultats obtenus, exploitables par un opérateur.

## Revendications

1. Procédé de contrôle par courants de Foucault de la surface d'une alvéole circonférentielle (2) formée dans un disque (1) de turboréacteur, au moyen d'une sonde (6), ladite sonde comportant une tige (7) fixée à un support (8), un premier capteur multiélément (9) et un second capteur multiélément (9) pour réaliser le contrôle, solidaires des déplacements de la tige (7) et adaptés pour être introduit dans ladite alvéole circonférentielle (2), les deux capteurs multiéléments (9) étant disposés dos-à-dos et sollicités élastiquement en sens opposé, de manière à assurer un contact optimal de ces capteurs multiéléments (9) avec les surfaces opposées (3) à contrôler, ladite tige (7) étant montée pivotante autour de son axe (y-y') pour l'introduction des deux capteurs multiéléments (9) dans ladite alvéole (2), le procédé étant **caractérisé en ce qu'**il comprend les étapes consistant à
a) Positionner les deux capteurs (9) en regard de l'ouverture (5) de l'alvéole, de sorte qu'un axe commun (x-x') de ceux-ci est perpendiculaire à l'axe (A-A) du disque (1),
b) déplacer la sonde (6) dans une direction radiale du disque (f₂), vers l'intérieur de l'alvéole (2), de manière à introduire les deux capteurs multiéléments (9) dans ladite alvéole (2), puis
c) faire pivoter la tige (7) d'un angle de 90°, de sorte que les capteurs multiéléments (9) sont en contact avec les faces latérales (3) de l'alvéole (2) à contrôler, et enfin
d) balayer toute la surface de l'alvéole circonférentielle (2).

2. Procédé selon la revendication 2, **caractérisé en ce que**, lors de l'étape d), la sonde (6) reste fixe et le disque (1) tourne d'un angle de 360°.

3. Sonde (6) à courants de Foucault pour le contrôle de la surface d'une alvéole circonférentielle (2) formée dans un disque (1) de turboréacteur, comportant une tige (7) fixée à un support (8) et un premier capteur multiélément (9) et un second capteur multiélément (9) pour réaliser le contrôle, solidaires des déplacements de la tige (7) et adaptés pour être introduit dans ladite alvéole circonférentielle (2), les deux capteurs multiéléments (9) étant disposés dos-à-dos et sollicités élastiquement en sens opposé, de manière à assurer un contact optimal de ces capteurs multiéléments avec les surfaces opposées (3) à contrôler, ladite tige (7) étant montée pivotante autour de son axe (y-y'), pour l'introduction des deux capteurs multiéléments (9) dans ladite alvéole (2), ladite sonde (6) étant **caractérisée en ce qu'**elle est adaptée pour mettre en oeuvre le procédé selon la revendication 1.

4. Sonde selon la revendication 3, **caractérisée en ce qu'**au moins un ressort (13) est intercalé entre les deux capteurs multiéléments (9).

5. Sonde selon l'une quelconque des revendications 3 à 4, **caractérisée en ce que** chaque capteur multiélément (9) a une forme correspondant au profil d'une face (3) de l'alvéole (2) à contrôler.

6. Sonde selon l'une quelconque des revendications 3 à 5, **caractérisée en ce que** les deux capteurs multiéléments (9) sont maintenus dos-à-dos et sont reliés à la tige (7) par un agencement de coulissement (14).

## Patentansprüche

1. Verfahren zur Überprüfung einer in einer Scheibe (1) eines Strahltriebwerks gebildeten umlaufenden Nut mittels Wirbelströmen unter Verwendung einer Sonde (6), wobei die Sonde einen Schaft (7), der an einem Träger (8) befestigt ist, einen ersten Mehrfachelement-Sensor (9) und einen zweiten Mehrfachelement-Sensor (9) zur Durchführung der Überprüfung aufweist, die mit den Bewegungen des Schafts (7) verbunden und geeignet sind, in die umlaufende Nut (2) eingeführt zu werden, wobei die beiden Mehrfachelement-Sensoren (9) Rücken-an-Rücken angeordnet und gegenläufig derart elastisch vorgespannt sind, dass ein optimaler Kontakt dieser Mehrfachelement-Sensoren (9) mit den zu überprüfenden gegenüberliegenden Flächen (3) gewährleistet wird, wobei der Schaft (7) schwenkbar um seine Achse (y-y') gelagert ist, um die beiden Mehrfachelement-Sensoren (9) in die Nut (2) einzuführen, wobei das Verfahren **dadurch gekennzeichnet ist, dass** es die Schritte umfasst, die bestehen aus:
a) Positionieren der beiden Sensoren (9) gegenüber der Öffnung (5) der Nut derart, dass eine gemeinsame Achse (x-x') von diesen senkrecht zur Achse (A-A) der Scheibe (1) steht,
b) Verlagern der Sonde (6) in einer radialen Richtung (f₂) der Scheibe zur Innenseite der Nut (2) gerichtet, um die beiden Mehrfachelement-Sensoren (9) in die Nut (2) einzuführen, und dann
c) Schwenken des Schafts (7) um 90°derart, dass die Mehrfachelement-Sensoren (9) mit den zu überprüfenden Seitenflächen (3) der Nut (2) in Berührung kommen, und schließlich
d) Abtasten der gesamten Oberfläche der umlaufenden Nut (2).

2. Verfahren nach Anspruch 2, **dadurch gekennzeichnet, dass** während des Schritts d) die Sonde (6) fixiert bleibt und die Scheibe (1) um einen Winkel von 360° dreht.

3. Wirbelstromsonde (6) zur Überprüfung der Oberfläche einer umlaufenden Nut (2), die in einer Scheibe (1) eines Strahltriebwerks ausgebildet ist, umfassend einen Schaft (7), der an einem Träger (8) befestigt ist, einen ersten Mehrfachelement-Sensor (9) und einen zweiten Mehrfachelement-Sensor (9) zur Durchführung der Überprüfung, die mit den Bewegungen des Schafts (7) verbunden und geeignet sind, in die umlaufende Nut (2) eingeführt zu werden, wobei die beiden Mehrfachelement-Sensoren (9) Rücken-an-Rücken angeordnet und gegenläufig derart elastisch vorgespannt sind, dass ein optimaler Kontakt dieser Mehrfachelement-Sensoren (9) mit den zu überprüfenden gegenüberliegenden Flächen (3) gewährleistet wird, wobei der Schaft (7) schwenkbar um seine Achse (y-y') gelagert ist, um die beiden Mehrfachelement-Sensoren (9) in die Nut (2) einzuführen, wobei die Sonde (6) **dadurch gekennzeichnet ist, dass** sie zur Umsetzung des Verfahrens nach Anspruch 1 geeignet ist.

4. Sonde nach Anspruch 3, **dadurch gekennzeichnet, dass** zwischen den beiden Mehrfachelement-Sensoren (9) mindestens eine Feder (13) eingefügt ist.

5. Sonde nach einem der Ansprüche 3 bis 4, **dadurch gekennzeichnet, dass** jeder Mehrfachelement-Sensor (9) eine dem Profil einer zu überprüfenden Seite (3) der Nut (2) entsprechende Form aufweist.

6. Sonde nach einem der Ansprüche 3 bis 5, **dadurch gekennzeichnet, dass** die beiden Mehrfachelement-Sensoren (9) Rücken-an-Rücken gehalten werden und durch eine Gleitanordnung (14) mit dem Schaft (7) verbunden sind.

## Claims

1. A method for eddy current inspection of the surface of a circumferential slot (2) formed in a turbojet disk (1) by means of a probe (6), the probe comprising a stem (7) fastened to a support (8) and a first multi-element sensor (9) and a second multi-element sensor (9),for performing the inspection, constrained to move with the stem (7) and adapted to be inserted into said circumferential slot (2), the two multi-element sensors (9) being disposed back to back and being urged resiliently in opposite directions, so as to provide good contact between the multi-element sensors (9) and the opposite surfaces (3) for inspection, and said stem (7) is mounted to pivot about its own axis (y-y') to enable the two multi-element sensors (9) to be inserted in said slot (2),the method being **characterized in that** it comprises the steps consisting in:
a) positioning the two sensors (9) in register with the opening (5) of the slot so that a common axis (x-x') of the sensors extends perpendicularly to the axis (A-A) of the disk (1);
b) moving the probe (6) in a radial direction (f₂) of the disk towards the inside of the slot (2) so as to insert the two multi-element sensors (9) in said slot (2); then
c) causing the stem (7) to pivot through an angle of 90° so that the multi-element sensors (9) come into contact with the side faces (3) of the slot (2) for inspection; and finally
d) scanning the entire surface of the circumferential slot (2).

2. A method according to claim 1, **characterized in that** during step d), the probe (6) remains stationary and the disk (1) is turned through an angle of 360°.

3. An eddy current probe (6) for monitoring of the surface of a circumferential slot (2) formed in a turbojet disk (1), comprising a stem (7) fastened to a support (8) and a first multi-element sensor (9) and a second multi-element sensor (9),for performing the inspection, constrained to move with the stem (7) and adapted to be inserted into said circumferential slot (2), the two multi-element sensors (9) being disposed back to back and being urged resiliently in opposite directions, so as to provide good contact between the multi-element sensors (9) and the opposite surfaces (3) for inspection, and said stem (7) is mounted to pivot about its own axis (y-y') to enable the two multi-element sensors (9) to be inserted in said slot (2), said probe (6) being adapted to implement the process according to claim 1.

4. A probe according to claim 3, **characterized in that** at least one spring (13) is interposed between the two multi-element sensors (9).

5. A probe according to claim 3 or 4, **characterized in that** each multi-element sensor (9) is of a shape that corresponds to the profile of a face (3) of the slot (2) for inspection.

6. A probe according to any one of claims 3 to 5, **characterized in that** the two multi-element sensors (9) are held back to back and are connected to the stem (7) by a sliding arrangement (14).
